Europäisches Patentamt

European Patent Office

Office européen des brevets

(19)

(11) Veröffentlichungsnummer : **0 209 034**
**B1**

# (12) EUROPÄISCHE PATENTSCHRIFT

(45) Veröffentlichungstag der Patentschrift :
**30.08.89**

(21) Anmeldenummer : **86109236.9**

(22) Anmeldetag : **07.07.86**

(51) Int. Cl.⁴ : **G 03 B 27/00**

(54) Verfahren und Vorrichtung zur Erzeugung positiver Kopien von positiven Vorlagen.

(30) Priorität : **19.07.85 DE 3525807**

(43) Veröffentlichungstag der Anmeldung :
**21.01.87 Patentblatt 87/04**

(45) Bekanntmachung des Hinweises auf die Patenterteilung : **30.08.89 Patentblatt 89/35**

(84) Benannte Vertragsstaaten :
**CH FR GB IT LI**

(56) Entgegenhaltungen :
**DE—A— 3 004 717**
**DE—B— 1 268 658**
**GB—A— 2 069 794**
**US—A— 3 564 131**

(73) Patentinhaber : **Agfa-Gevaert AG**

**D-5090 Leverkusen 1 (DE)**

(72) Erfinder : **Wagensonner, Eduard, Dipl.-Ing.**
**Eichenstrasse 1**
**D-8011 Aschheim (DE)**

EP 0 209 034 B1

## Beschreibung

Die Erfindung betrifft Verfahren und Vorrichtungen nach dem Oberbegriff des Anspruchs 1.

Elektronische Scan- bzw. Reproduktionsverfahren nach dem Oberbegriff werden trotz der gegenüber einer integralen Belichtung längeren Kopierzeiten zunehmend genutzt, weil sie Möglichkeiten zur Bildbeeinflussung, z. B. der elektronischen Bildverbesserung und der partiellen Farbkorrektur bieten. Ein solches Verfahren geht z. B. aus der DE-A-30 04 717 hervor.

Dabei ist es üblich, Bilder von negativen Vorlagen auf Negativmaterial zu belichten, während Bilder von positiven Vorlagen auf Umkehrmaterial belichtet werden. Dies ist ein Material, das an den Stellen, an denen eine hohe Kopierlichtmenge auftrifft, praktisch weiß wird, während die unbelichteten Stellen schwarz bleiben. Dies bedeutet, daß die Stellen geringer Dichte in der Vorlage mit hoher Kopierlichtmenge und damit großer Strahlintensität aufbelichtet werden müssen. Die üblicherweise angewendeten Lichtstrahlen, wie Strahl einer Kathodenstrahlröhre oder eines Lasers, haben jedoch keinen gleichmäßigen Intensitätsquerschnitt über den Strahl, sondern eine Gauß-Verteilung. Dies bedeutet, daß mit zunehmender Intensität der auf dem Kopiermaterial eine Schwärzung bzw. Aufhellung bewirkende Strahldurchmesser zunimmt.

Untersuchungen an Bildern haben ergeben, daß die mittleren und geringen Dichten bei den unterschiedlichsten Motiven am häufigsten auftreten und hauptsächlich zur Bildgestaltung beitragen. Dies bedeutet jedoch, daß die bildwichtigen Bereiche von positiven Vorlagen mit einem Strahl verhältnismäßig großen Durchmessers aufgezeichnet werden, d. h., mit einer geringeren Auflösung abgebildet werden als die Bereiche der positiven Vorlage mit größerer Dichte. Die Kopien von positiven Vorlagen — punkt- oder zeilenweise kopiert auf Umkehrmaterial — erreichen deshalb eine geringere subjektive Bildgüte als die mit gleicher Einrichtung von Negativen auf Negativpapier belichteten Kopien.

Aufgabe der Erfindung ist es, Kopien von positiven Vorlagen unter Nutzung der Möglichkeiten der punktweisen Aufbelichtung mit gleicher Bildgüte herzustellen wie die von Negativen.

Diese Aufgabe wird erfüllt bei einem Verfahren nach Anspruch 1.

Durch die mit verhältnismäßig geringem Aufwand an Elektronik bei punktweiser Aufbelichtung durchgeführte Positiv/Negativ-Umkehr entsteht auf dem Negativ-Kopiermaterial eine Kopie von der positiven Vorlage, die im Bereich geringer und mittlerer Dichten mit geringer Strahlintensität aufgezeichnet wird, d. h., mit einem sehr feinen Strahl. Die Auflösung ist deshalb in diesem bildwichtigen Bereich sehr gut, während die dichteren Bereiche, in denen die Auflösung weniger gut ist, zum Bildeindruck nur wenig beitragen.

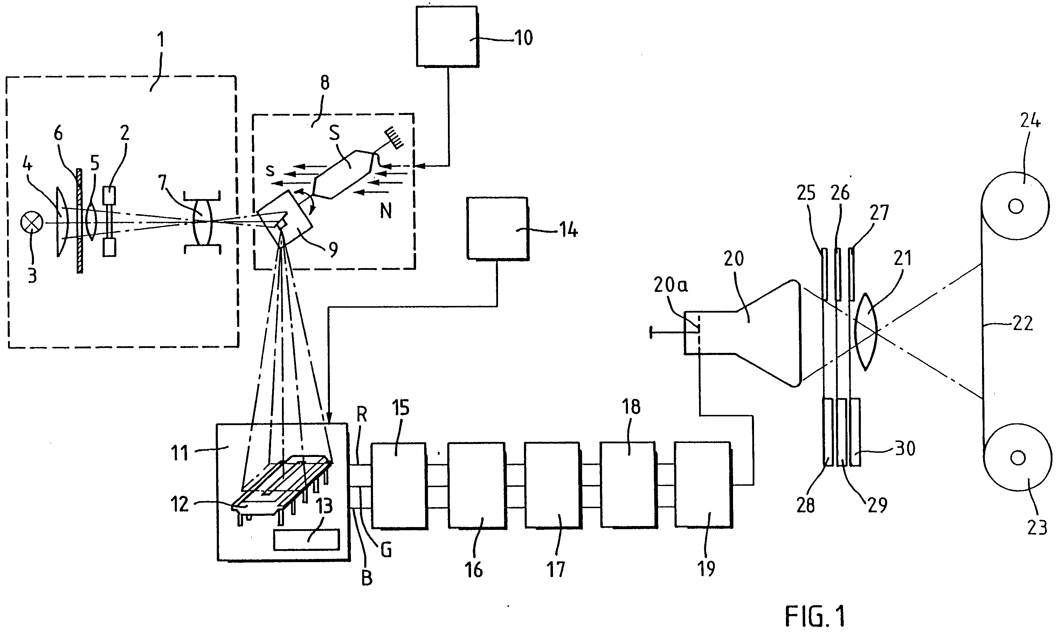

Weitere Einzelheiten und Vorteile der Erfindung ergeben sich aus den Unteransprüchen im Zusammenhang mit der Beschreibung eines Ausführungsbeispiels, das im folgenden anhand einer Prinzipskizze erläutert ist. In der einzigen Figur ist mit 1 eine Vorlagenbühne bezeichnet, in der eine positive Vorlage 2 im Strahl einer Lichtquelle 3 angeordnet ist. Das Licht der Lichtquelle 3 wird durch Kondensorlinsen 4 und 5 auf der positiven Vorlage 2 gesammelt, während eine Blende 6 das nicht für die Abbildung benötigte Licht abschattet.

Die durchleuchtete positive Vorlage 2 wird durch ein Objektiv 7 über einen Schwingspiegel 9 abgebildet auf eine CCD-Zeile 12 in einer CCD-Anordnung 11. Die Ausgabe der Meßwerte innerhalb der CCD-Zeile 12 erfolgt unter Verwendung eines Schieberegisters 13 in bekannter Weise.

Der Schwingspiegel 9 wird angetrieben von einem Schleifenschwinger S in einem Schwingspiegelsystem 8, das durch einen periodisch arbeitenden Generator 10 angetrieben ist. Schließlich ist ein Taktfrequenzgenerator 14 vorgesehen, der in der CCD-Anordnung 11 die Ausgabe der Meßwerte über das Schieberegister 13 steuert.

An die CCD-Anordnung mit drei Ausgängen für die roten, die grünen und die blauen Signale schließt sich eine Speichereinrichtung 15 an, die zumindest eine Zeile der Signalwerte speichern kann, zweckmäßigerweise jedoch die Meßwerte einer ganzen Vorlage 2, um image processing optimal ausführen zu können. Daran schließt sich für die drei Farbkanäle eine Phasenumkehrschaltung 16 an, die für jede der drei Farben die Signalfolge der positiven Vorlage in eine negative Signalfolge umkehrt. Die symbolisch angedeuteten Verstärker können z. B. Inverterstufen sein. Daran anschließend ist eine Crispening-Stufe 17 zur Bildverbesserung durch Aufsteilen der Kanten vorgesehen. Dies ist eine Anordnung, die aus dem Eingangssignal ein Korrektursignal gewinnt, welches dem Ausgangssignal hinzuaddiert wird. Dieses Summensignal hat eine Form, bei der die Flanken von Impulsen steiler gemacht werden. An die Crispening-Stufe 17 schließt sich eine Verstärkerstufe 18 an, in der für jeden Farbkanal eine Verstärkung der Signale entsprechend den Bedürfnissen der nachfolgenden Stufen durchgeführt wird. Schließlich folgt eine γ-Entzerrungsstufe 19 zur Linearisierung des Grauwertes der die Farbbilder aufzeichnenden Farbröhre 20. Diese enthält ein Steuergitter 20a für alle Farben, das nacheinander die Helligkeit der Farbauszüge auf dem Schirm der Röhre 20 bestimmt. Der Bildschirm der Röhre 20 wird durch ein Objektiv 21 auf ein bandförmiges, negatives Fotopapier 22 aufbelichtet, das jeweils nach einem Belichtungsvorgang um eine Bildlänge fortgeschaltet wird. Hierzu dienen die symbolisch angedeuteten Ab- und Aufwickelspulen 23 und 24.

Zwischen dem Schirm der Röhre 20 und dem Objektiv 21 sind Farbfilter in den additiven Grundfarben blau, grün und rot 25, 26 und 27 in den Strahlengang bewegbar angeordnet. Die Bewegung in den Strahlengang erfolgt durch Steuermagnete 28, 29 und 30.

Die Wirkungsweise der beschriebenen Einrichtung ist wie folgt :

Die von der Lichtquelle 3 durchleuchtete positive Vorlage 2 wird über das Objektiv 7 und den Schwingspiegel 9 Zeile für Zeile auf die CCD-Zeile 12 abgebildet. Die Periodendauer des Generators 10 für den Schwingspiegel ist dabei groß gegenüber der Periodendauer für den Abtastzyklus in der CCD-Zeile.

In der CCD-Zeile 12 sind nebeneinander drei verschiedene Zeilen von für je eine Farbe sensibilisierten Fotoempfängern angeordnet, so daß durch das Schieberegister 13 parallel durch die drei Leitungen die roten, grünen und blauen Bildsignale in den Speicher 15 eingeschoben werden. Es kann aber auch eine einfache CCD-Zeile 12' hinter auswechselbaren Farbfiltern angeordnet sein, wobei unter Einschaltung des entsprechenden Filters in drei Abtastvorgängen jeweils die Meßwerte eines Farbauszuges in den Speicher 15 eingeschrieben werden. Der Inverter 16 wandelt die positiven Bildsignale um in negative Bildsignale, während die Crispening-Stufe 17 die Kanten steiler macht. Der Verstärker 18 zusammen mit der γ-Entzerrungsstufe bringt die nunmehr negativen Bildsignale in eine Form, die der Charakteristik der Röhre und der Empfindlichkeit des Negativbildmaterials 22 angepaßt ist. Wird nun z. B. das Rotfilter 25 in den Abbildungsstrahlengang gebracht, wird das Steuergitter 20a entsprechend den umgekehrten Rotsignalen aktiviert und der negative Rotauszug auf das Bildmaterial 22 aufbelichtet. Nach Beendigung dieser Belichtung wird das Filter 25 durch das Grünfilter 26 ersetzt und der Grünauszug aus dem Speicher 15 mittels des Steuergitters auf den selben Bereich des Negativmaterials 22 aufbelichtet. Schließlich folgt der Blauauszug durch das Blaufilter 27, gesteuert ebenfalls durch das Gitter 20a. Das nunmehr zu Ende belichtete Bild kann dann auf die Aufwickelspule 24 aufgewickelt werden und ein unbelichtetes Material von der Vorratsspule 23 in die Belichtungsstelle gebracht werden. Es kann nun die Vorlage 2 gewechselt werden oder von der selben Vorlage nochmals eine Kopie angefertigt werden.

Die von dem Verstärker 18 und der γ-Entzerrstufe 19 vorgegebene Kopierlichtmenge, insbesondere gesteuert durch die Strahlintensität, ist dabei so bemessen, daß auf jeden Fall die Bereiche der Vorlage 2 mit geringer Dichte und möglichst auch die Bereiche mittlerer Dichte mit einem Strahl geringer Intensität und damit geringer Breite aufgezeichnet werden. Auf diese Weise wird sichergestellt, daß die für den subjektiven Bildeindruck wichtigen Bereiche der Kopie geringer und mittlerer Dichte mit einem feinen Strahl und damit mit hoher Auflösung aufgezeichnet werden.

**Patentansprüche**

1. Verfahren zur Erzeugung positiver Kopien von positiven Vorlagen mittels einer zeilenweisen fotoelektrischen Abtastung der positiven Vorlagen und einer punkt- oder zeilenweisen Aufbelichtung auf ein fotografisches Kopiermaterial, dadurch gekennzeichnet, daß die Abtastwerte der Bildpunkte der positiven Vorlagen elektronisch zu einem Negativ umgekehrt und mittels eines in seiner Intensität von der Vorlagendichte abhängig gesteuerten Lichtstrahles, z. B. des Strahls einer Kathodenstrahlröhre oder eines Lasers, auf ein Negativkopiermaterial aufbelichtet werden, so daß für mittlere und geringe Vorlagendichten keine merkliche Aufweitung des Lichtstrahls erfolgt.

2. Verfahren nach Anspruch 1, dadurch gekennzeichnet, daß die Abtastwerte zumindest eines Teiles der Bildpunkte zeitweise zur Bildverarbeitung in einem Speicher abgelegt werden.

3. Verfahren nach einem der vorangehenden Ansprüche, dadurch gekennzeichnet, daß die Intensität und die Verweilzeit des Lichtstrahles so gesteuert werden, daß bei mittleren und geringen Dichten der Kopie noch keine merkliche Aufweitung des Lichtstrahls eintritt.

4. Vorrichtung zur Durchführung des Verfahrens nach Anspruch 1 mit einer Vorrichtung zur zeilenweisen fotoelektrischen Abtastung der Meßwerte der positiven Vorlagen und einer Vorrichtung zur punkt- und zeilenweisen Aufbelichtung des Bildes auf ein Kopiermaterial mittels eines in seiner Intensität von der Vorlagendichte abhängig gesteuerten Lichtstrahls, dadurch gekennzeichnet, daß die mit einem Negativkopiermaterial versehene Vorrichtung eine Phasenumkehrschaltung (16) zur Erzeugung eines negativen Bildsignals aufweist.

5. Vorrichtung nach Anspruch 4, dadurch gekennzeichnet, daß der Lichtstrahl zur Aufbelichtung auf das Kopiermaterial ein vom Zentrum nach außen, insbesondere nach einer Gauß'schen Verteilung abnehmendes Intensitätsprofil aufweist.

6. Vorrichtung nach Anspruch 5, dadurch gekennzeichnet, daß der Lichtstrahl Licht aller drei Grundfarben enthält und drei Farbauszüge der positiven Vorlage (2) nacheinander jeweils durch ein entsprechendes, auswechselbares Farbfilter aufbelichtet werden.

**Claims**

1. Process for producing positive copies of positive images by means of linear photoelectric scanning of positive images and point-for-point or linear exposure of a photographic copying material, characterised in that the scanning values of the scanning elements of the positive images are reversed electronically to a negative and are exposed using a light beam the intensity of which is controlled as a function of image density, for example using the beam from a cathode ray tube or a laser, on a negative copying material, so that there is no noticeable widening of the light beam for average and low image densities.

2. Process according to claim 1, characterised in that the scanning values of at least a part of the scanning elements are occasionally filed in a store for image processing.

3. Process according to one of the preceding claims, characterised in that the intensity and the duration of the light beam are controlled so that there is still no noticeable widening of the light beam for average and low copy densities.

4. Device for carrying out the process according to claim 1 using a device for linear photoelectric scanning of the measured values of positive images and using a device for point-for-point and linear exposure of the image on a copying material by means of a light beam the intensity of which is controlled as a function of image density, characterised in that the device provided with a negative copying material has a phase reversal switch (16) to produce a negative image signal.

5. Device according to claim 4, characterised in that the light beam has an intensity profile which decreases from the centre outwards, in particular in accordance with a Gaussian distribution, to expose the copying material.

6. Device according to claim 5, characterised in that the light beam contains light of all three primary colours and three colour components of the positive image (2) are each exposed one after another by a corresponding interchangeable colour filter.

**Revendications**

1. Procédé de fabrication de copies positives d'originaux positifs au moyen d'un balayage photo-électrique par ligne des originaux positifs et au moyen d'une exposition à la lumière, par points ou par lignes, sur un support photographique de copie, caractérisé en ce que les valeurs, obtenues par balayage, des points d'image des originaux positifs sont inversées électroniquement pour donner un négatif et donnent lieu à l'exposition d'un support de copie négative à un faisceau lumineux, par exemple au faisceau d'un tube à faisceau cathodique ou d'un laser, dont l'intensité est commandée en fonction de la densité de l'original, de façon telle que pour les densités moyennes et faibles de l'original il ne se produit pas d'élargissement notable du faisceau lumineux.

2. Procédé selon la revendication 1, caractérisé en ce que l'on met temporairement en mémoire les valeurs, fournies par le balayage, d'au moins une partie des points d'image, en vue du traitement de l'image.

3. Procédé selon l'une des revendications précédentes, caractérisé en ce que l'intensité et la durée du passage du faisceau lumineux sont commandées de façon telle que pour les densités moyennes et faibles de la copie il ne se produit pas d'élargissement notable du faisceau lumineux.

4. Dispositif pour la mise en œuvre du procédé selon la revendication 1, comportant un dispositif pour déterminer, par balayage photo-électrique par lignes, les valeurs de mesure des originaux positifs, ainsi qu'un dispositif pour exposer, par points et par lignes, l'image sur un support de copie au moyen d'un faisceau lumineux dont l'intensité est commandée en fonction de la densité des originaux, caractérisé en ce que le dispositif muni d'un support de copie négative présente un circuit (16) d'inversion de phase pour donner un signal d'image négatif.

5. Dispositif selon la revendication 4, caractérisé en ce que le faisceau lumineux prévu pour exposer l'image sur un support de copie présente un profil d'intensité qui va en décroissant du centre vers l'extérieur, en particulier selon une distribution gaussienne.

6. Dispositif selon la revendication 5, caractérisé en ce que le faisceau lumineux contient la lumière des trois couleurs fondamentales ; et en ce que l'on expose respectivement l'une après l'autre trois images, résultant de la sélection des différentes couleurs, de l'original positif (2), au moyen d'un filtre coloré approprié que l'on peut échanger.

FIG. 1

EP 0 209 034 B1